Europäisches Patentamt

European Patent Office

Office européen des brevets

(19)

(11) EP 0 775 429 B1

(12) **EUROPÄISCHE PATENTSCHRIFT**

(45) Veröffentlichungstag und Bekanntmachung des Hinweises auf die Patenterteilung:
23.09.1998 Patentblatt 1998/39

(21) Anmeldenummer: 95909769.2

(22) Anmeldetag: 22.02.1995

(51) Int Cl.6: **H04Q 7/24**, H04Q 7/38

(86) Internationale Anmeldenummer:
PCT/EP95/00648

(87) Internationale Veröffentlichungsnummer:
WO 95/22874 (24.08.1995 Gazette 1995/36)

(54) **VERFAHREN UND SCHALTUNGSANORDNUNG ZUR HERSTELLUNG VON FERNMELDEVERBINDUNGEN**

METHOD AND CIRCUIT ARRANGEMENT FOR PRODUCING TELECOMMUNICATION CONNECTIONS

PROCEDE ET CIRCUIT PERMETTANT D'ETABLIR DES LIAISONS DE TELECOMMUNICATION

(84) Benannte Vertragsstaaten:
AT CH DE LI

(30) Priorität: 22.02.1994 DE 9402920 U

(43) Veröffentlichungstag der Anmeldung:
28.05.1997 Patentblatt 1997/22

(73) Patentinhaber: PEITZ GmbH
80686 München (DE)

(72) Erfinder:
• PEITZ, Albert
  D-80686 München (DE)

• BERGMANN, Gerhard
  D-82061 Neuried (DE)

(74) Vertreter: Dosterschill, Peter, Dr. et al
Patentanwalt,
Fichtenstrasse 11
85570 Ottenhofen (DE)

(56) Entgegenhaltungen:
EP-A- 0 544 448          WO-A-92/22174
WO-A-93/17515          WO-A-93/25050
WO-A-93/25051          DE-A- 3 921 637
DE-A- 4 008 790          DE-C- 4 143 266

**Beschreibung**

Die Erfindung betrifft ein Verfahren und eine Schaltungsanordnung zur Herstellung von Fernmeldeverbindungen nach dem Oberbegriff der Patentansprüche 1 bzw. 3.

Aus den deutschen Offenlegungsschriften DE-OS 40 08 790 und DE-OS 41 43 266.5 sind Fernmeldewählnetze bekannt, die Teilnehmern eine Vielzahl von Leistungsmerkmalen zur Verfügung stellen. Besondere Maßnahmen zu einer möglichst weitgehenden Erreichbarkeit zumindest ausgewählter Teilnehmer in und von geschlossenen Netzen und Nebenstellenanlagen sind jedoch nicht vorgesehen.

Ausgehend von diesem Stand der Technik liegt der Erfindung das technische Problem zugrunde, ein Verfahren und eine Schaltungsanordnung zur Herstellung von Fernmeldeverbindungen zu schaffen, welche eine möglichst weitgehende Erreichbarkeit von Teilnehmern auch in und von Sondernetzen und Nebenstellen realisieren.

Zur Lösung dieses Problems werden erfindungsgemäß ein Verfahren und eine Schaltungsanordnung bereitgestellt, wie sie in den Patentansprüchen definiert sind.

Das erfindungsgemäße Verfahren und die erfindungsgemäße Schaltungsanordnung realisieren eine möglichst uneingeschränkte Erreichbarkeit von Teilnehmern, ganz gleich, an welchem Ort (Arbeitsplatz, im Auto, Hotel, zuhause, etc.) sie sich gerade befinden. Im Geschäftsverkehr fällt es Sekretärinnen oft sehr schwer, die gesuchten Personen durch Wahl der ortsabhängigen Rufnummern aller in Frage kommenden Aufenthaltsorte aufzuspüren, um dem dringenden Wunsch eines A-Teilnehmers stattzugeben. Dem B-Teilnehmer können dabei eine einzige, persönliche Identifikation (PR) oder mehrere funktionsbezogene (als Mitarbeiter, Clubmitglied) Rufnummern zugeordnet sein.

Die erfindungsgemäße Schaltungsanordnung bzw. das erfindungsgemäße Verfahren sind in der Lage, mehrere Fernmeldedienste zu bearbeiten; es kann die Übermittlung von Sprache, Ton, Bild und Daten sowie Bereitstellung von Rundsende- und Konferenz-Verbindungen) in einem solchen Netz bereitgestellt werden. Dabei lassen sich Maßnahmen zur Wahrung der Vertraulichkeit und zum Schutz vor unerwünschten Belästigungen durch Mißbrauch der persönlichen Rufnummer PR implementieren. Durch die Verwendung eventuell mehrerer funktionsbezogener Rufnummern besteht die Möglichkeit, für jeden Teilnehmer seine persönliche Rufnummer PR ähnlich wie eine sogenannte PIN (personenidentifizierende Nummer) geheimzuhalten. Die erfindungsgemäße Schaltungsanordnung kann in ein Geschäfts- oder Behörden-Telekommunikations-Netz mit orts-neutralem, personenbezogenen Netzzugang integriert werden, wie ihn die UCCN-Technologie (Uniform Common Communication Network) bietet. Darüberhinaus kann der direkte Zugang zu den beste; henden Mobilkommunikationsnetzen D1/D2 und E1 vorgesehen werden. Damit werden Teilnehmer unter anderem auch auf Reisen und zu Hause unter einer, ihrer persönlichen, Dienstnummer erreichbar. Dies gilt mit Einführung eines europaweiten Verbundbetriebes der GSM-Mobilfunknetze dann sogar europaweit.

Erfindungsgemäß bietet ein solches Netz natürlich auch die wesentlichen Leistungsmerkmale moderner Nebenstellenanlagen und wird den besonderen Sicherheitsanforderungen in einem geschlossenen Geschäfts- oder Behördennetz gerecht. Durch diese Leistungsmerkmale werden die heute bekannten Nebenstellenanlagen nicht mehr in dem bisher vorliegenden Umfang benötigt.

Das erfindungsgemäße Netz ist insbesondere ein Breitbandnetz, das beispielsweise in Glasfasertechnik realisiert ist, so daß sich auch ein Video-/Fernseh-Verteilnetz nach dem UCCN-System installieren läßt.

Ausführungsbeispiele der Erfindung werden nun anhand der Zeichnungen beschrieben.

Es zeigt

Figur 1    die Struktur eines Fernmeldenetzes, in das die erfindungsgemäße Schaltungsanordnung integrierbar ist und in dem das erfindungsgemäße Verfahren durchführbar ist;

Figur 2    ein als Vermittlungsanlage ausgebildeter zentraler Knoten eines Netzes nach Figur 1;

Figur 3    eine schematische Darstellung der Rufbehandlung von Teilnehmern und das Prinzip der Ermittlung des Aufenthaltsortes im Zusammenwirken der Rufnummern-Register (RNR) mit dem Common Location Register (CLR); und

Figur 4    die Struktur des Registers CLr und weiterer Register und Einträge im/des CLR.

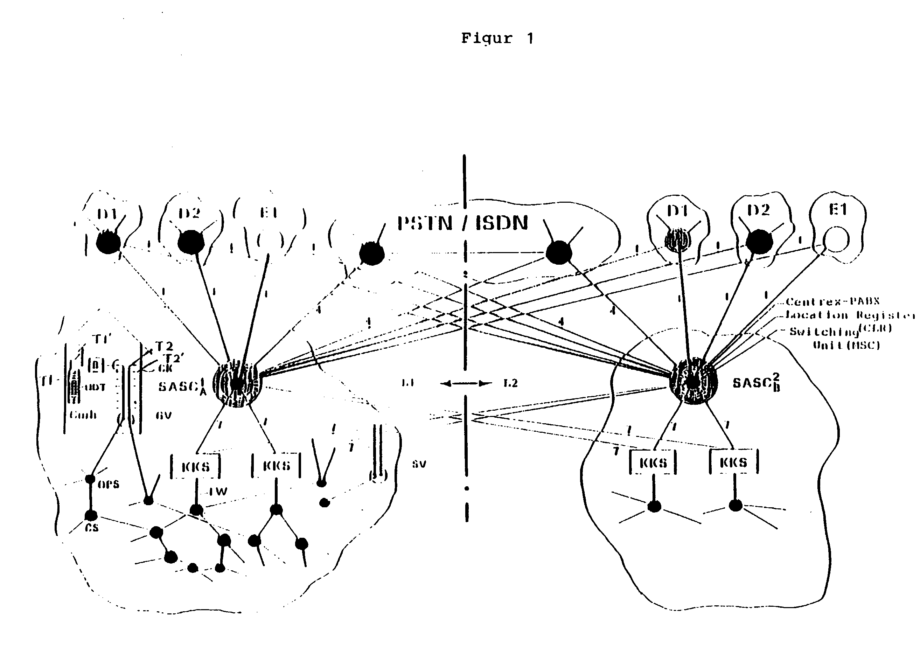

Die folgende Beschreibung erläutert die Struktur des Netzes (Figur 1). Es besteht beispielsweise aus zwei gleichrangigen, gleichgroßen Teilnehmer-Zugangs-Vermittlungsstellen (SASC) an getrennten Orten L1 und L2. Bei Ausfall einer Vermittlungsstelle übernimmt die andere den kompletten Verkehr. Verschiebungen technischer Einrichtungen z. B. während des Umzuges von Dienststellen eines Unternehmens entfallen. Dies gewährleistet optimale Planungssicherheit.

Da die Vermittlungsstellen auch alle Nebenstellenfunktionen beinhalten, entfällt die Vielzahl der heute notwendigen Nebenstellenanlagen. Alle Teilnehmer in Gebäuden werden über zellular angeordnete Koaxial-Kabel bzw. zunehmend über Lichtwellenleiter angeschlossen. Damit wird der vollständige, ortsneutrale Netzzugang gewährleistet. Eine Vielzahl von Beispielen zeigt, wie sich die einzelnen Funktionsträger über die Ruf-Nummern-Vergabe gegen unerwünschte Belästigungen schützen und ihre Erreichbarkeit optimieren können.

2

Das Netz besteht aus zwei gleichrangigen, gleichgroßen Teilnehmer-Zugangs-Vermittlungsstellen (SASC) an den Orten L1 und L2. Jedes SASC ist so dimensioniert, daß es jeweils 100% des Gesamtverkehrsaufkommens in der HVSt bewältigen kann. An beiden Orten L1 und L2 sind direkte Netzübergänge in das terrestrische ISDN-Netz der Postbehörde, die D1- und D2-Netze für Erreichbarkeit in schnellen privaten und öffentlichen Verkehrsmitteln und in das El-Netz für die Erreichbarkeit zu Hause, im städtischen Bereich und Freizeitzentren über einen E1-Handheld Booster mit geringer Sendeleistung vorhanden. Die in den Mobilfunknetzen üblicherweise verwalteten teilnehmerindentifizierenden Daten (PR, SNR, SSI (Subscriber Service Indicator)) werden bei der zuvor beschriebenen Netzwerkkonfiguration in den noch zu beschreibenden zweiten Registern CLR (Common Location Register) der Vermittlungsstellen SASC verwaltet. Dies hat den außerordentlich wichtigen Vorteil, daß die entsprechenden Teilnehmer ohne Wahl einer speziellen Netzkennzahl auch in den Mobilfunknetzen erreichbar sind.

Man kann davon ausgehen, daß die genannten Mobilkommunikationsnetze bis zu einer möglichen Einführung des hier beschriebenen Netzes eine landesweite, praktisch 100%-ige Flächendeckung aufweisen und ein europaweiter Verbundbetrieb mit GSM-Mobilfunknetzen anderer europäischer Staaten besteht, so daß durch die erwähnten, direkten Netzübergänge die berechtigten Teilnehmer europaweit erreichbar sind und praktisch von jedem Ort Zugang zum eigenen und dem öffentlichen Telefonnetz haben. Unerwünschte Verkehrsbeziehungen lassen sich in einfacher Weise durch sogenannte "roaming restriction" einschränken und durch entsprechende Einträge in den jeweiligen persönlichen Telefon-Chipkarten auch völlig unterbinden.

Kennzeichnend dabei ist, daß die Daten der Mitglieder/Teilnehmer dieses Netzes im Gegensatz zu heute für den Zugang über die Mobilkommunikationsnetze D1, D2 und E1 im hier beschriebenem Netz verwaltet werden und in beiden SASC in einem sogenannten "Common Location Register" (CLR) gespeichert sind. Das CLR erfüllt dabei alle Funktionen, die in einem Mobilfunknetz durch das HLR (Home Location Register), VLR (Visitor Location Register) und EIR (Equipment Identification Register) übernommen werden.

Der Austausch, der für die Herstellung der Verbindungen und für die Gebührenverrechnung notwendigen Daten geschieht standardmäßig durch den Austausch der sogenannten "Mobile Application Parameter" (MAP) über die Common Signalling Channel (CCS7) an den Netzübergängen.

Die Übergänge zum ISDN an den beiden Orten L1 und L2 dienen wie heute dem Zugang ins öffentliche Netz und entsprechen im wesentlichen dem Anschluß einer Nebenstellenanlage. Allerdings empfiehlt es sich, den Zugang über eine einzige (Netz)-Zugangskennzahl (z.B. 175) durchzuführen, was gebührentechnisch und aus Verfügbarkeitsgründen, wie später noch erläutert wird, viele Vorteile hat.

Die hierarchische Netzarchitektur mit zwei gleichrangigen SASC, wie sie Gegenstand der deutschen Patentanmeldung P 39 21 637.3 ist, hat nur auf den ersten Blick den Nachteil eines erhöhten Leitungs- und Hardware-Aufwandes. So sind z.B. die Zugangsbündel zu den öffentlichen Mobilfunknetzen und zum öffentlichen ISDN gesplittet, wobei jeweils 50% der Zugangsleitungen über eine größere Entfernung geschaltet werden müssen. Dies gilt auch für den gleichrangigen Anschluß der Kabel- Kopf-Stationen (KKS) an den beiden Orten L1 und L2. Wie jedoch eine Vergleichsrechnung zeigt, werden dadurch praktisch keine höheren Betriebskosten entstehen.

Im Regelbetrieb, d.h. beide SASC sind uneingeschränkt funktionsfähig, führt die gleichmäßige Aufteilung der Leitungen zu einer gleichen Verkehrsverteilung und damit zu einer gleichmäßigen dynamischen Belastung des gesamten, z.B. eines Behördennetzes unabhängig davon, wie sich gerade die Gesamtzahl aller Teilnehmer auf die beiden Orte L1 und L2 verteilt. Dadurch ergibt sich eine große Planungssicherheit und eine permanente Verschiebung von technischen Resourcen, beispielsweise während eines Umzugs von Teilen eines in das Fernmeldenetz eingebundenen Unternehmens von L1 nach L2 wird vermieden. Außerdem kann dadurch ein Höchstmaß an Betriebssicherheit erreicht werden, wenn man z.B. die Leitungsbündel und die SASC so dimensioniert, daß jedes für sich alleine im Falle eines Ausfalls des anderen praktisch 100% des Gesamtverkehrs bewältigen kann. Auch alle permanenten, temporären und wechselnden Teilnehmer- und Betriebsdaten sind grundsätzlich doppelt vorhanden und werden automatisch durch die Abwicklung des Verkehrs dynamisch "up-to-date" gehalten.

Wie aus der Figur 1 ersichtlich, bietet das vorgeschlagene Netz ein "Dual homing" bis zu jedem Orts-/Teilnehmer-Netzzugang. Dabei handelt es sich bei den Teilnehmer-Netzzugängen in den Gebäuden und auf dem Gelände beispielsweise der Unternehmen um einen zellularen, optischen Äther, der die Voraussetzung für einen ortsneutralen Netzzugang ist. Die technischen Einzelheiten des verwendeten Prinzips sind in der Broschüre "Telekommunikation - Wege zu universellen Anwendungen", 2.Ausgabe, November 1992, Peitz GmbH, München, ausführlich beschrieben. Im folgenden wird nur auf die wesentlichen Besonderheiten gegenüber den heute ortsgebundenen, teilnehmerindividuellen Anschlüssen und die generelle Struktur des optischen Äthers eingegangen.

Das Teilnehmer-Zugangs/Anschlußnetz besteht aus der Kabel-Kopf-Station (KKS) und einem Glasfaserkabel mit Standard "Cable Splitter" (CS), "Optical Power Splitter" (OPS) und einer "Curb-Electronic" (Curb), die in der Anfangsphase den Übergang auf ein Coax-Antennen-Kabel bildet, welches alle Räume der Gebäude versorgt. In jedem Raum befindet sich eine Antennensteckdose, über die der sogenannte Raum-Booster (B) die in jedem Raum vorhandenen Cordless Telefone (z.B. T1) und Sekretärinnen-Stationen (z.B. T1') mit dem Netz verbindet.

Wie die Figur 1 zeigt, ist auch das gesamte Teilnehmer-Anschlußnetz aus Verfügbarkeitsgründen doppelt ausgelegt. Neben der Ortsneutralität (wie in den Mobilfunknetzen) hat das vorgeschlagene Anschlußnetz den Vorteil, daß nur so viele Sprachkanäle/Sprachkanalpaare vorgesehen werden müssen, wie zur Bewältigung des Gesamtverkehrs in der Hauptverkehrsstunde im Einzugsbereich einer KKS erforderlich sind. Bei z.B. 3000 Sprachkanalpaaren (2x75 MHz) sind das mindestens 30000 Teilnehmer.

Die Telefone (z.B. T1, T2 ) und Sekretärinnen-Stationen (z.B. T1'. T2', ...) können am Arbeitsplatz konstruktiv normale Tischtelefone sein, allerdings mit einem E-Prom oder einer Steckeinrichtung für die persönliche Telefon-Chipkarte und schaltungstechnisch mit einem Mobiltelefon vergleichbar. Alle Teilnehmer, für die eine uneingeschränkte, ortsunabhängige Erreichbarkeit von wesentlicher Bedeutung ist, sind jedoch vorzugsweise zusätzlich im Besitz eines Mini-Pocket-Telefons. Dieses Universal Dialog Terminal (UDT) verfügt im wesentlichen ebenfalls über die gleichen Funktionen, wie ein herkömmliches Mobiltelefon. Sie haben den Vorteil, daß sie auch einen Zugang zu den D1/D2-Netzen im 900 MHz-Band - über im Verkehrsmittel fest installierte Autobooster - und dem EI-Netz im 1.8 GHz-Band - über einen kleinen, tragbaren Handheld-Booster - haben und als "Very low power"-Geräte ausgestaltet werden können.

Die Booster (B) übernehmen die Anpassung an die unterschiedlichen Frequenzlagen der unterschiedlichen Netze und stellen die erforderliche Sendeleistung bereit, d.h. der Sende-/Empfangsteil ist vom Handapparat getrennt, der über ein Cordless- oder über ein Coax-Interface im Auto als D-Netz-Endgerät, außerhalb von Gebäuden und dem Gelände eines Unternehmens, für das die erfindungsgemäßen Leistungsmerkmale implementiert sind, mit dem "Taschen-Booster" als E-Netz-Endgerät und innerhalb des Versorgungsbereiches des eigenen Netzes wie ein Cordless-Telefon als Endgerät des Fernmeldenetzes, völlig unabhängig vom jeweiligen Aufenthaltsort verwendet werden kann. Auf diese Weise erreicht man die praktisch uneingeschränkte, ortsunabhängige Erreichbarkeit und verschafft allen Besitzern des UDT (Univerisal Dialog Terminal) die Möglichkeit, überall zu telefonieren.

Wie die Figur 1 zeigt, sind auch die Leitungen zwischen den SASC und den KKS an den beiden Orten L1 und L2 gesplittet, eine Maßnahme, die sich nur aufgrund der Besonderheiten des Netzkonzeptes wirtschaftlich durchführen läßt. Auch hier spielt der Gesichtspunkt der höchstmöglichen Verfügbarkeit und die schwer zu kalkulierende Verkehrsverteilung zwischen den Standorten eine entscheidende Rolle.

Bei den Verbindungsleitungen zwischen SASC und KKS handelt es sich um Standard Digital Signalleitungen (ISDN Primär Multiplex-Verbindungen) mit 30x64 kb/s-Kanalpaaren, die im Submultiplex betrieben werden, so daß eine Leitung 4x30 = 120 Sprachkanalpaare einschließlich der CCS7-Signalisierungsleitungen bedienen kann.

In einem traditionellen Netz sind entweder für den Querverkehr zwischen den beiden Standorten und Nebenstellen an einer Ort mehrere nicht unbeträchtlich dicke Leitungsbündel mit 64 kb/s-Sprachkanalpaaren erforderlich, oder bei Abwicklung dieses Verkehrs über das öffentliche ISDN fallen entsprechend hohe Gebühren an. Deshalb sind die Betriebskosten bei der vorgeschlagenen Strukturierung, vor allem wegen der vierfach besseren Nutzung der Querleitungsbündel trotz der 100%-igen Leitungsreserve aus Sicherheitsgründen niedriger.

Betrieblich gesehen hat das vorgeschlagene Verfahren den Vorteil, daß die beiden SASC wie zwei, am gleichen Ort installierte Vermittlungsstellen im "Load Sharing" einen gemeinsamen Einzugsbereich bedienen, d.h. nachrichtentechnisch wachsen die Orte trotz der gegebenenfalls relativ großen Entfernung zu einer Einheit zusammen.

Damit wird

a) das gesamte Verkehrsaufkommen zwischen den Teilnehmergruppen (z.B: Unternehmen, Behörden) in dem ersten Ort und von dem ersten Ort zu dem zweiten Ort sowie umgekehrt ein Orts/Intern-Verkehr, für den keinerlei externe Gebühren anfallen;
b) die Möglichkeit einer durchgängigen Nummerierung - unabhängig vom Standort - der unterschiedlichen Bereiche geschaffen;
c) im abgehenden Verkehr durch jedes SASC der gebührengünstigste Zugang zu den fremden Netzen gewählt. Ein Geschäfts- bzw. Behörden-Gespräch vom Ort L1 zum Ort L2 ins öffentliche Netz und umgekehrt kann z.B. zum Ortsgesprächstarif abgewickelt werden.

Das öffentliche Netz ist schon heute in der Lage, bei Verwendung einer einheitlichen Nebenstellen-Rufnummer, den jeweils örtlich günstigsten Netzübergang zum Nebenstellen-Netz/Behörden-Netz anzusteuern, d.h. für rufende Teilnehmer beispielsweise aus dem Ort L1 erfolgt dieser Übergang dort unabhängig davon, ob der Sitz des Unternehmens bzw. der Behörde am Ort L1 oder L2 ist und für rufende Teilnehmer aus dem Ort L2 in L2, ebenfalls unabhängig davon, ob dieser Unternehmens- bzw. Behördensitz der Ort L1 oder L2 ist. Damit sparen auch außerhalb dieses Netzes angesiedelte Teilnehmer Gebühren.

Es ist noch darauf hinzuweisen, daß die hier vorgeschlagene Vernetzung auch in anderer Weise erfolgen kann; jedoch bietet die UCCN-Konzeption erhebliche Vorteile.

Heute hat praktisch jeder Geschäftsbetrieb eine und größere Unternehmen sogar mehrere Nebenstellen. Abhängig von der jeweiligen Größe hat jede Nebenstelle einen oder mehrere Vermittlungs-/Auskunftsplätze.

Solche Einrichtungen sind heute für eine optimale Bedienung der rufenden Teilnehmer unbedingt erforderlich. Je höher der Komfort solcher Plätze ist, um so leichter fällt es, eine zügige Behandlung von Rufen aus dem öffentlichen Netz zu gewährleisten und intern eine optimale Verkehrsabwicklung sicherzustellen. Neben dem ortsneutralen Teilnehmerzugang liegt der wohl größte Vorteil des hier beschriebenen Netzkonzeptes darin, daß auf die physikalische Installation der vielen Nebenstellen verzichtet werden kann, wodurch nicht nur umfangreiche Investitionen gespart, sondern auch die Belastung des öffentlichen Netzes für den Querverkehr z.B. zu anderen Unternehmensteilen entfällt (Gebühreneinsparung) und außerdem eine schnellere und flexiblere Verkehrsabwicklung ermöglicht wird. Die erfindungsgemäße Schaltungsanordnung ist in der Lage, sogenannte Centrex - bzw. Nebenstellen-Funktionen in den SASC zu realisieren.

Im folgenden wird eine im Zusammenhang mit der erfindungsgemäßen Schaltungsanordnung und dem erfindungsgemäßen Verfahren verwendbare Numerierung beschrieben.

Heute haben viele Teilnehmer, beispielsweise Politiker unterschiedliche Aufgaben, wechselnde Arbeitsplätze und Arbeitszeiten und erfüllen viele, auch häufig wechselnde Funktionen. Das Numerierungsschema mit einer persönlichen Rufnummer (PR) muß auch Funktionswechseln gerecht werden, sowohl für eine Kommunikation mit netzexternen Teilnehmern als auch für eine Kommunikation mit internen Teilnehmern. Die persönliche Kommunikationsnummer (PR) möchte mit Sicherheit nicht jeder allgemein bekanntmachen. Deshalb bedarf das entsprechende Register (CLR), in dem diese Information verfügbar ist, eines ausgeprägten Zugriffsschutzes. Aus diesem Grund muß die Numerierung der Teilnehmer des Netzes mehrschichtig sein. Sie muß natürlich darüber hinaus auch nationalen und internationalen Standards sowohl in der Struktur als auch bezogen auf die Zahl der Ziffern gerecht werden.

Die persönliche Rufnummer (PR) kann z.B. eine 5- oder 6-stellige Zahl sein. Da die ersten Ziffern 0, 9, 8 und 1 - wie später erläutert - für Sonderfunktionen benötigt werden, können bei 5-stelligen Zahlen 60.000 PR und bei 6-stelligen Zahlen 600.000 PR vergeben werden. Jeder Teilnehmer des erfindungsgemäßen Netzes erhält eine PR unabhängig davon, ob er sie uneingeschränkt, eingeschränkt oder gar nicht benutzen darf. Dadurch ergibt sich eine einheitliche Registerstruktur des CLR. Der Zugang zu Sonderfunktionen und Diensten und dergleichen läßt sich jederzeit und schnell zuteilen oder ändern. Mit einer 5- oder 6-stelligen PR kann auch eine ausreichende Reserve an Nummern bereitgestellt werden. Die PR einschließlich der Netzkennzahl 175 XXXXX (Y) ist in der Telefon-Chipkarte eingetragen. Bei entsprechender Berechtigung dient sie bei abgehenden Rufen außerhalb des Zugangsbereiches des z.B. Behördennetzes den Mobilfunknetzen D1/D2, E1 als "Pointer" für den Abruf der MAP (Mobile Application Parameter) aus dem CLR der SASC des Netzes und zur Lokalisierung des Inhabers sowie zur Erstellung des Rufdatenjournals für die spätere Gebühren-Verrechung. Bei entsprechenden "Roaming Vereinbarungen" mit den Mobilfunknetzbetreibern kann ein rufender Teilnehmer nicht nur Verbindungen in das eigene Netz, sondern auch in die Mobilfunknetze und das öffentliche PSTN/ISDN der Telekom aufbauen, wie jeder gewöhnliche Teilnehmer der genannten Mobilfunknetze.

Die PR und das UDT mit seinen unterschiedlichen Boostern bietet z.B. einem Regierungsmitglied durch die Mitbenutzung der nationalen und europäischen Mobilfunknetze die Möglichkeit, landesweit/europaweit praktisch von jedem Ort in die Mobilfunknetze, in das öffentliche PSTN/ISDN und natürlich in das eigene Behörden-Netz Verbindungen aufzubauen. Umgekehrt sind sie unter Beachtung der später erläuterten Einschränkungen jederzeit und an jedem Ort von allen Teilnehmern, die die PR kennen oder Rufe, die ein Vermittlungsplatz oder eine Sekretärin weitervermittelt, erreichbar.

Im aufsteigenden Verkehr dient die erste Ziffer 0 als "Escape digit" ins öffentliche PSTN/ISDN. Im absteigenden Verkehr erreicht man mit der Kennzahl (1750) die zentralen Vermittlungs-/Auskunftsplätze.

Die erste Ziffer 9 ist die Querverkehrskennzahl zwischen unterschiedlichen Behörden/Unternehmensbereichen.

Die erste Ziffer 8 ist die Service-Kennzahl für das gesamte Service-Angebot von z.B. Dienstleistungsunternehmen, Regierungs- und Parlamentsstellen, Parteizentralen sowohl für interne als auch externe Anrufer. Mit Auskunftssystemen und sonstigen Sonderdiensten läßt sich für solche Stellen die Öffentlichkeitsarbeit wesentlich verbessern.

Die erste Ziffer 1 ist die Kennzahl für alle Kurzrufnummern für die Sicherheitsorgane, die Administration, wie Wartungs- und Störungs-Stellen, und den sonst auch im öffentlichen Netz üblichen Einrichtungen. Diese sind intern und teilweise auch für externe Anrufe zugänglich. Mit den Kennzahlen 172, 173 und 174 können außerdem die Mobilfunknetze D1, D2 und El angewählt werden.

Einzelne Unternehmensteile oder Behörden an beiden Orten L1 und L2, die an das Netz in L1 oder L2 oder an beiden Standorten angeschlossen sind, erhalten eine eigene Nebenstellen-Bereichs-Kennzahl. Fallweise könnte ein Unternehmen auch zwei oder mehrere Kennzahlen haben. Entscheidend ist jedoch, und das ist eine wesentliche Zielsetzung, daß jede Organisationseinheit für die beiden Orte L1 und L2 mit einer einzigen Kennzahl auskommt und damit die nachrichtentechnische Einheit hergestellt wird, was vor allem unter dem Gesichtspunkt der Mobilität der Mitarbeiter des Unternehmens und der zeitlichen und quantitativen Unsicherheit bezüglich Aufgabenverlagerungen innerhalb des Unternehmens oder der Behörde zwischen den beiden Orten eine große Bedeutung erlangt.

Im internen und externen Verkehr werden Nebenstellen mit der Querverkehrs-Kennzahl 9 und der Nebenstellen/Bereichs-Kennzahl angewählt. Die Nebenstellen/Bereichs-Kennzahlen können 2-, 3- und 4-stellig sein. Die Teilnehmer-Nummern 2-, 3-, 4-, evtl. auch 5-stellig. Nebenstellen/Bereichs-Kennzahl und die Teilnehmernummer dienen sowohl intern als auch extern einer, der Organisation angepaßten Abwicklung des Telefonverkehrs, so wie das heute üblich ist. Es lassen sich außer Personen natürlich auch personenneutrale Institutionen adressieren. Wesentlich dabei ist, und das ist der ganz entscheidende Unterschied zu heute, daß diese Kennzahlen und Teilnehmer-Rufnummern die Persönlichen Rufnummern (PR) mehrschichtig verdecken, d.h. die Teilnehmer selber haben nur noch einen einzigen Anschluß am Netz unabhängig davon, ob sie permanent oder temporär, z.B. in Bonn oder Berlin, anwesend sind und unabhängig davon, ob sie z.B. in der Partei-Zentrale, im Parlament oder als Regierungs- oder Ausschuß-Mitglied angerufen werden.

Eine physikalische Installation von Nebenstellen erübrigt sich wie eingangs bereits erläutert. Diese Tatsache, zusammen mit dem ortsneutralen Zugangsprinzip gestattet es, sowohl im internen als auch - vor allem - aus dem öffentlichen Netz, z.B. einen Geschäftsführer eines Unternehmens oder einen Politiker entsprechend seinen unterschiedlichen Aufgaben über unterschiedliche Kennzahlen, einschließlich direkt unter seiner PR anzurufen.

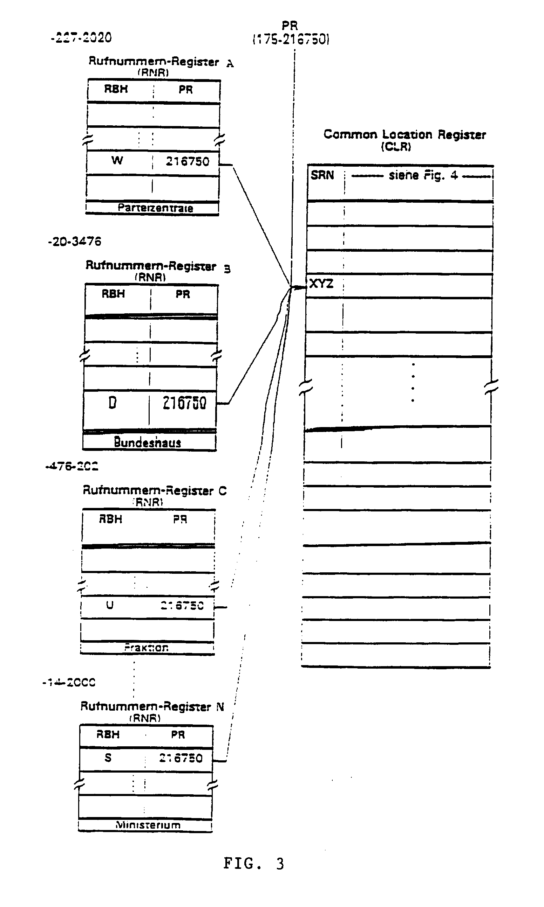

Am Beispiel der Aufgaben von Politikern und an Hand der Figur 3 soll dies erläutert werden:

a) Ein Politiker ist Parteimitglied;
b) er ist Abgeordneter;
d) er gehört einer Fraktion an;
d) er kann Minister sein;
e) er hat in jedem Fall einen Anschluß am erfindungsgemäßen Behördennetz.

Anrufende Teilnehmer (A-Teilnehmer) wollen den Politiker in allen Angelegenheiten in aller Regel als Teilnehmer des beschriebenen Behördennetzes ansprechen. Im Beispiel ist angenommen, er habe die PR 216750 (Figur 3).

Die Figur 3 zeigt mehrere Rufnummernregister ($RNR_A$, $RNR_B$ .... $RNR_{N_i}$) und das Common Location Register (CLR). Für die hier beschriebenen Vorgänge sind nur die dafür wesentlichen Einträge in den genannten Registern dargestellt. In den RNR sind das RBH-Feld, in dem die momentanen Rufbehandlungsanweisungen eingetragen sind und das PR-Feld, in dem der "Pointer", d.h. die jeweilige Adresse des B-Teilnehmers im CLR eingetragen ist. Vom CLR ist lediglich das SRN-Feld (Subscriber Roaming Number) gezeigt, das den jeweiligen aktuellen Aufenthaltsort des B-Teilnehmers kennzeichnet. Im RBH-Feld der RNR können unterschiedliche Einträge enthalten sein. So bedeutet zum Beispiel

W - Rufweiterleitung
D - Direkte Durchschaltung
U - Rufumleitung
S - Sekretärinnen-Station.

Anhand der wesentlichen Aufgaben oder Funktionen eines Politikers sind folgende Beispiele denkbar:

Bei Wahl der Nummer 1750 erhält man vom zentralen Vermittlungs-/ Auskunftsplatz bei Angelegenheiten der Berufsgenossenschaft die Nebenstellen-Kennzahl der Berufsgenossenschaft, oder der zentrale Vermittlungsplatz vermittelt das Gespräch direkt zum Vermittlungsplatz der Arbeitsgruppe. Dort wird eine Sekretärin entscheiden, ob der Anruf weitergeleitet wird oder nicht. Als Parteimitglied hat jeder Politiker also auch in der virtuellen Nebenstelle für die Partei-Zentrale seine Rufnummer. Es sei angenommen, diese Rufnummer ist:

$$1\ 7\ 5 \quad 9 \quad 2\ 2\ 7 \quad 2\ 0\ 2\ 0$$

|____ Parteimitglied

|_____ z.B. Partei-Zentrale

|_____ Querverkehr-Kennzahl

|_____ Behörden-Netzkennzahl

Erachtet die Partei-Zentrale einen Anruf für so wichtig, daß er durchgeschaltet werden soll, dann wird über die Rufweiterleitungsfunktion der virtuellen Nebenstelle der Anschluß 2020 aktiviert. Die oben angegebene Rufnummer ist ein "Pointer" im CLR auf die PR des Politikers. Im Gegensatz zu heute findet das Netz den Politiker. ohne daß die Partei-Zentrale wissen muß, wo er gerade ist:

a) in seinem Büro im Ministerium
b) in der Kabinettssitzung

c) im Parlament bei einer Bundestagsdebatte oder in seinem Abgeordneten-Büro

d) über das D1 oder D2-Netz in seinem Dienstwagen oder öffentlichen Verkehrsmitteln, z.B. bei einer Reise nach Berlin

d) über das El-Netz zu Hause oder in seinem Wahlkreis.

Natürlich setzt das voraus, daß der Politiker auch überall zu erreichen sein möchte. So wird er z.B. in der Kabinettssitzung sein UDT abschalten bzw. seine Sekretärin beauftragen, nur die dringendsten Anrufe weiterzuleiten. In diesem Zusammenhang sei daran erinnert, daß natürlich jede Sekretärinnen-Station, wenn sie besetzt ist, die Möglichkeit bietet, Anrufe zuerst entgegenzunehmen, auch wenn der Angerufene nicht anwesend ist.

Bürger des Wahlkreises eines Politikers werden ihn in aller Regel als Abgeordneten ansprechen wollen. Es sei angenommen, der Politiker habe als Abgeordneter folgende Rufnummer:

$$1\ 7\ 5\quad 9\quad 2\ 0\quad\quad 3\ 4\ 7\ 6$$

|___ Abgeordneter

|_____ Bundeshaus

|_____ Querverkehrs-Kennzahl

|_____ Behördennetz-Kennzahl

Anfragen an den Abgeordneten werden in der Regel von seinem Abgeordneten-Büro bearbeitet. Dringende persönliche Anfragen lassen sich jedoch wie im ersten Beispiel durch Eingabe der Nummer 3476 weiterleiten, d.h. als Abgeordneter ist die Rufnummer 175 9 20 3476 der "Pointer" auf den PR-Eintrag im CLR. Bezüglich der Rufweiterleitung geschieht das gleiche wie im Beispiel 1 beschrieben.

Die Sekretärin und die engsten Mitarbeiter eines Politikers wissen in der Regel, welche Aufgabe er z.B. als Politiker gerade wahrnimmt und sind deshalb in der Lage, ihn gezielt z.B. in einer Fraktionssitzung zu erreichen. Es sei angenommen, der Politiker habe als Fraktionsmitglied folgende Rufnummer:

$$9\quad 4\ 7\ 6\quad 2\ 0\ 2$$

|_____ Fraktionsmitglied

|_____ z.B. X-Fraktion

|_____ Querverkehrs-Kennzahl

In aller Regel wird diese Rufnummer zu einer direkten Durchschaltung zum UDT des Politiker führen, evtl. auf eine Sekretärinnen-Station, falls eine solche vorhanden ist. Das Beispiel soll zeigen, daß auch Institutionen wie Fraktion, Bundestag, Ausschüsse, Kabinett und dergleichen, eine eigene Kennzahl erhalten können, so daß dort Auskünfte eingeholt und gegebenenfalls auch eine direkte Durchschaltung erfolgen kann. ohne die PR des Betroffenen kennen zu müssen.

Im Geschäftsverkehr, d.h. mit Industrie. externen Behörden und Verwaltungen und internen Behörden und Regierungsstellen, wird man einen Politiker oder Minister in seinem Ministerium anrufen, z.B. unter der Rufnummer:

1 7 5    9   1 4     2 0 0 0

|_____     Minister

|_____     Ministerium

|_____     Querverkehrs-Kennzahl

|_____     Behördennetz-Kennzahl

Die Sekretärin/der persönliche Referent des Ministers wird immer die/derjenige sein, die/der während den normalen Bürozeiten entscheidet, welche Anrufe zum Minister durchgeschaltet bzw. mit welcher Dringlichkeit an den Minister weitergeleitet werden. Sie haben über die RBH-Einträge deshalb den direkten Zugriff zum CLR, womit sie ihn an jedem beliebigen Ort innerhalb des Behördennetzes, aber auch extern über die Mobilfunknetze wie beschrieben, erreichen können.

Die Beispiele zeigen, daß für einen hochrangigen Politiker die persönliche Rufnummer (PR) mehrfach überdeckt ist, ohne daß dadurch die ortsungebundene jederzeitige Erreichbarkeit eingeschränkt wird. Die Überdeckung dient lediglich einer geregelten Abwicklung seiner vielfältigen Aufgaben.

Nur mit der PR (im Beispiel die Nr. 175 - 216 750) entzieht sich ein Teilnehmer des Behörden-Netzes allen Aufgaben und organisatorischen Zwängen. Je umfangreicher diese Aufgaben sind, um so vorsichtiger wird er mit dieser PR umgehen. Dienstliche Zwänge mögen ihn zwar verpflichten, diese PR bestimmten Personen bekanntzugeben; ansonsten dürfte er sie aber nur einem begrenzten privaten und parteipolitischen Bekanntenkreis offenbaren. Dabei bleibt es jedem Einzelnen überlassen, entsprechend seiner Mentalität. diese Möglichkeit großzügig oder restriktiv zu nutzen. Ein junger Abgeordneter wird seine PR sicher auf die Visitenkarte schreiben, während ein Bundeskanzler wohl äußerst vorsichtig mit seiner PR umgehen wird. Im Falle eines Mißbrauchs, der ja nicht ganz auszuschließen ist, läßt sich eine solche PR auch jederzeit neu vergeben.

Die nachfolgende, grobe Ermittlung der Dimensionierungsparameter erhebt in keiner Weise einen Anspruch auf eine ausreichende Genauigkeit für die Planung des in Betracht gezogenen Behördennetzes. Andererseits sollte sie jedoch ausreichend sein, um zumindest die Größenordnung des Netzes und der Netzelemente und den Einfluß der neuen Netzarchitektur für einen Vergleich mit traditionellen Lösungen bestimmen zu können.

**Anzahl der Centrex-Nebenstellen**

**Ministerien/Behörden**

| a) | Bundeshaus | 1 |
|---|---|---|
| b) | Präsidialamt/Bundeskanzleramt/Ministerien | ca. 20 |
| c) | Parteizentralen | ca. 5 |
| d) | sonstige Bundesbehörden | ca. 20 |
| Summe: | | **46** (~50) |

**Institutionen**

| a) | Parlament/Bundesrat | 2 |
|---|---|---|
| b) | Fraktionen | ca. 5 |
| c) | Kabinett/Ausschüsse | ca. 20 |
| d) | sonstige | ca. 10 |
| Summe: | | **37** (~40) |

**Stiftungen      ca. 10**

**Anzahl der Kennzahlen**

Gemäß der obigen Auflistung muß bei ausreichender Reserve mit mindestens 100 Centrex-Nebenstellen gerechnet werden, d.h. entsprechend der Bedeutung und Größe der Behörden und Institutionen sind 2- oder 3-stellige Kennzahlen erforderlich.

**Zur Zahl der Teilnehmer**

| | | |
|---|---|---|
| a) | Bundeshaus | ca. 2000 |
| b) | Präsidialamt/Kanderamt/Ministerien (20x500) | ca. 10000 |
| c) | Parteizentrale (5x50) | ca. 250 |
| d) | Sonstige Behörden (20x100) | ca. 2000 |
| e) | Parlament/Bundesrat (2x25) | ca. 50 |
| f) | Fraktionen (5x20) | ca. 100 |
| g) | Kabinett/Ausschüsse (20x5) | ca. 100 |
| h) | Stiftungen (15x50) | ca. 750 |
| <u>Summe:</u> | | **ca. 15250** |
| (einschließlich Sonstige plus Reserve) | | **ca. 20000** |

**Zum Gesamtverkehr, Verkehrsverteilung und Verkehrsaufkommen**

Rechnet man mit einem mittleren Verkehrsaufkommen von $A_T = 0.1$ Erlang in der HVSt je Teilnehmer (T), so ergibt sich ein Gesamtverkehr für beide Standorte von ca. $A = T \times A_T = 20.000 \times 0.1 = 2000$ Erlang/h Zur Verkehrsverteilung (a) Ein bestimmter Anteil des ankommenden und abgehenden Verkehrs kommt aus und geht in die öffentlichen Netze. Der überwiegende Verkehrsanteil ist jedoch Intern- und Querverkehr innerhalb der Regierungs-und Parlaments-Viertel in Bonn und Berlin bzw. zwischen Bonn und Berlin. Bei konservativer Rechnung sollte dieser Verkehrsanteil mindestens $a_1 = 60\%$ sein.

Der zweitgrößte Verkehrsanteil kommt und geht aus/ins öffentliche Fernmeldewählnetz PSTN/ISDN der Telekom. Es sei angenommen, daß dieser Verkehrsanteil $a_2 = 30\%$ beträgt. Damit verbleibt für die Mobilfunknetze D1, D2, E1 ein Anteil von $a_3 = 10\%$. Dabei sei darauf hingewiesen, daß normalerweise die Verkehrsspitze von und in die Mobilfunknetze außerhalb der HVSt im stationären Netz liegen, z.B. am frühen Morgen und abends nach Ende der Regelarbeitszeit. Deshalb empfiehlt es sich, diese Leitungsbündel etwas großzügiger zu dimensionieren, was wegen des relativ kleinen Verkehrsaufkommens auch ohne weiteres wirtschaftlich möglich ist.

**Zu Gleichzeitigkeitsfaktoren (p)**

Es wäre falsch unter den gegebenen Umständen, d.h. Berücksichtigung der Mobilität und der nicht genau bestimmbaren Aufteilung von Ministerien und sonstigen Institutionen, von einer gleichmäßigen Verkehrsverteilung zwischen Bonn und Berlin auszugehen. Deshalb wird für die Dimensionierung der Leitungsbündel und der Netzelemente von einem Gleichzeitigkeitsfaktor $p_1 = 70\%$ ausgegangen. Das bedeutet, daß in jedem Standort 70% des Gesamtverkehrs im Regelbetrieb bewältigt werden kann. Auch der Verkehr von und in die öffentlichen Netze dürfte - wenn auch geringeren Schwankungen - unterliegen. Dem soll durch den Gleichzeitigkeitsfaktor $p_2 = 60\%$ Rechnung getragen werden.

**Zu Verkehrsaufteilung (A), Größe der Leitungsbündel (n), Anzahl der Digital-Signal-Leitungen (N) und Verkehrsbelastung (B) im Regelbetrieb ist auszuführen:**

Unter Berücksichtigung der obigen Annahmen ergibt sich für einen Standort folgender Gesamtverkehr:

a) Im Teilnehmeranschlußnetz (KKS - SASC) je KKS

$$A_T = \frac{A \times P1}{2} = \frac{2000 \times 0{,}7}{2} = 700 \text{ Erl}$$

Jede KKS wird mit $n_t$ = 1500 Sprachkanalpaare über $N_T$ = 14 (2x7) Digital-Signal-Leitungen an die SASC angeschlossen. Im Regelbetrieb ergibt sich dabei eine Belastung/ein Nutzungsgrad von

$$B_T = \frac{AT}{nT} = \frac{700}{1500} = 0,47 \text{ Erlang/Sprachkanal}$$

b) Der Verkehr vom und zum öffentlichen Fernmeldewählnetz (SASC-PSTN/ISDN)

$$A_E = \frac{A}{2} \times P_2 \times a_2 = \frac{2000}{2} \times 0.6 \times 0.3 = 180 \text{ Erlang}$$

Jedes SASC wird mit $n_E$ = 2x480 Sprachkanalpaaren über $N_E$ = 2x4 Digital-Signal-Leitungen an das PSTN/ISDN angeschlossen.
Im Regelbetrieb ergibt dies eine Belastung/ein Nutzungsgrad von

$$B_E = \frac{AE}{nE} = \frac{180}{480} = 0,38 \text{ Erlang/Sprachkanal}$$

c) Der Verkehr von und in die Mobilfunknetze (SASC-D1, D2, E1)

$$A_M = \frac{A}{2} \times P_2 \times \frac{a3}{3} = \frac{2000}{2} \times 0,6 \times \frac{0,1}{3} = 20 \text{ Erlang}$$

Jedes SASC wird mit $n_M$ = 2x3x120 Sprachkanalpaaren über $N_M$ = 2x3x1 Digital-Signal-Leitungen an die drei Mobilfunknetze D1, D2, E1 angeschlossen. Daraus ergibt sich eine Belastung/ein Nutzungsgrad im Regelbetrieb von

$$B_M = \frac{AM}{nM} = \frac{20}{120} = 0,17 \text{ Erlang/Sprachkanal}$$

**Zur Verkehrsbelastung bei Ausfall eines SASC oder einer KKS**

Im Regelbetrieb arbeiten die SASC und KKS im Loadsharing-Betrieb. Daraus folgt, daß sich die Belastung der Netzelemente und der Leitungsbündel bei Ausfall einer redundanten Einheit verdoppelt, ohne daß dabei die Erreichbarkeit eingeschränkt wird.
Es ergibt sich für:

$$B_T = 0,47 \times 2 = 0,94 \text{ Erlang/Sprachkanal}$$

$$B_E = 0,38 \times 2 = 0,76 \text{ Erlang/Sprachkanal}$$

$$B_M = 0,17 \times 2 = 0,34 \text{ Erlang/Sprachkanal}$$

Wie erwähnt kann die vorliegende Berechnung nur die Größenordnung des Netzes bestimmen. In der Tabelle 1 sind alle Dimensionierungsparameter zusammengefaßt und die Auswirkungen bei doppelter, dreifacher und vierfacher Teilnehmerzahl/Belastung aufgezeigt.

Zusammenfassend kann dabei festgestellt werden, daß weder bezogen auf die Zahl der Systemanschlüsse, noch bezogen auf die Vermittlungsleistung der Netzelemente mit Engpässen zu rechnen ist, da selbst bei vierfacher Teilnehmerzahl Beschaltungsreserven von ca. 60% vorhanden sind.

Die zentralen Netzknoten bzw. Vermittlungsstellen SASC1, SASC2 an den Orten L1 und L2 erfüllen im wesentlichen folgende vier wichtige Aufgaben:

1. Sie führen die Vermittlungsfunktionen (Switching) für ankommende Rufe aus den öffentlichen Netzen, für abgehende Rufe in die öffentlichen Netze und für den Internverkehr innerhalb der einzelnen Unternehmensteilen und den Querverkehr zwischen Unternehmensteilen und den Querverkehr zwischen den einzelnen Unterneh-

EP 0 775 429 B1

mensteilen in L1 und L2 aus. Die Switching Unit (SU) entspricht der eines Mobile Switching Centers (MSC), wie sie in Mobilfunknetzen eingesetzt sind;

2. sie verwalten die Teilnehmerdaten und die "Mobility Application Parameter" (MAP) in einem Common Location Register (CLR);

3. sie erfüllen die Centrex-Nebenstellenfunktionen (Centrex-PABX);

4. sie bilden die Netzübergänge in die öffentlichen Mobilfunknetze D1, D2 und El, sowie in das öffentliche Fernmeldewählnetz PSTN/ISDN der Postbehörde.

Die Terminal-Schnittstellen, die Sprachcodierung, die Signalisierung und die Schnittstellen in die öffentlichen Netze sind in Übereinstimmung mit den jeweils relevanten GSM-Standards. Dies bedeutet, daß für die Mobilfunknetze D1/D2 und E1 die beiden SASC sich funktional wie Netzübergänge in ein gleichartiges fremdes Mobilfunknetz verhalten. Die Übergänge ins PSTN/ISDN verhalten sich funktional identisch wie die Übergänge des PSTN/ISDN in ein Mobilfunknetz D1/D2 oder E1. Zur Einsparung von Leitungskosten ist das Trans Coding Equipment (TCE) jedoch dem Netzübergang am PSTN/ISDN zugeordnet, so daß dort bereits die Codewandlung der Sprachsignale und eine Reduzierung der Bitrate von 64 kb/s auf 16 kb/s für die Sprachkanalpaare erfolgt.

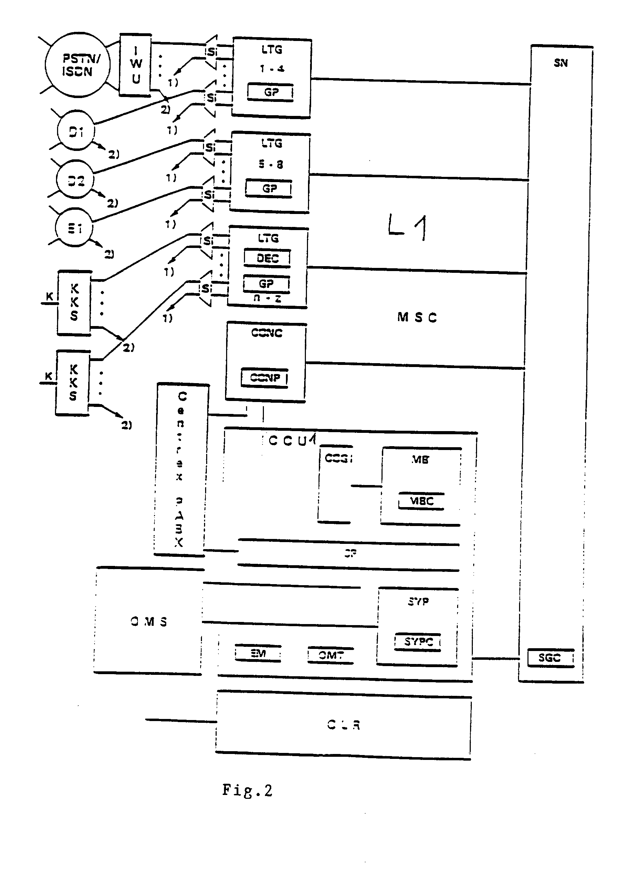

Die in Figur 2 dargestellte Switching Unit (MSC) verbindet die einzelnen Subsysteme (Centrex-PABX, Common Location Register (CLR) und das Operation und Maintenance System (OMS)) untereinander und stellt die Verbindungen zum Teilnehmer-Anschlußnetz (KKS) und in die öffentlichen Mobilfunknetze D1, D2, E1 sowie zum öffentlichen PSTN/ISDN her.

In Figur 2 bedeutet

1) "zu den Netzelementen des Ortes L2", und
2) "vom SACS2 des Ortes L2".

Die wesentlichen Funktionen der Switching Unit (MSC) bei der Rufbehandlung sind wie folgt:

- Zugriff zur Datenbasis (CLR) der eigenen Teilnehmer bei ankommenden und abgehenden Rufen;
- Zugriff zur Datenbasis der angeschlossenen Leitungsbündel zur Ermittlung des Betriebs- und Belegungszustandes;
- Durchführung der Standard Vermittlungsfunktionen und die Behandlung von Teleservices und Sonderdiensten;
- Mobile Management z.B. das Updating der Daten-Felder im CLR (Mobile Application Parameter);
- Rufdatenerfassung für die Gebührenermittlung, die Gebührenverrechnung mit fremden Verwaltungen und für Verkehrsstatistiken;
- Die Generierung von Benutzer-Hinweistexten;
- Signalisierungsanpassungen bei unterschiedlichen Signalisierungssystemen im Anschlußnetz und im öffentlichem Netz;
- Ressourcen-Verwaltung und Überwachung der Betriebssicherheit und Verfügbarkeit der eigenen und fremden Netzeinrichtungen.

Die beschriebenen Funktionen werden durch Hardware und Software durchgeführt.

Die Hardware repräsentiert die physikalischen Einrichtungen und erfordert eine modulare Architektur für einen flexiblen Ausbau und eine möglichst hohe Betriebssicherheit bei Ausfall von Teilkomponenten. Sie erlaubt eine flexible Anpassung an die Netzumgebung und verfügt über klar definierte Schnittstellen. Funktionen, die durch die Netzumgebung bedingt sind (Übergänge in die öffentlichen Netze und das Teilnehmeranschlußnetz), werden von den "Line/trunk-groups" (LTG') behandelt.

Die Signalisierung (Common Channel Signaling) nach CCS7 zur Übertragung der "Message Transfer Parameter" (MTP) und "Mobile Application Parameter" (MAP) erfolgt durch die Common Channel Network Control (CCNC).

Das Switching Network (SN) stellt die Verbindungen von Sprachkanalpaaren entsprechend den Rufanforderungen der Teilnehmer zwischen Verbindungsleitungen zu den fremden Netzen und dem Teilnehmeranschlußnetz sowie bei Intern-Verkehr zwischen Anschlüssen des Teilnehmeranschlußnetzes her. Das SN dient zusätzlich für die Verbindung von Common Signaling Channels und für semi-permanente Verbindungen für Interprocessor-Kommunikation.

Der Koordinations-Prozessor (CP) mit den zugehörigen Einrichtungen koordiniert die Zusammenarbeit der einzelnen Systemteile und den Informationsaustausch untereinander, so z.B. für die Verzonung, den Zugriff der Centrex PABX zum CLR und den Auskunltsdateien im Operations- und Maintenance-System (OMS).

Alle ankommenden und abgehenden Leitungen von und zu den öffentlichen Netzen, die Sprachkanalpaare des Teilnehmeranschlußnetzes, sowie die Common Channel Signaling-Leitungen werden an "Line Trunk Groups" (LTG) angeschlossen. Wie in einem Mobilfunknetz sind bei den Leitungen des Anschlußnetzes digitale Echo-Kompensatoren (DEC) erforderlich.

Die Bitrate zwischen einer LTG und dem SN beträgt 8.192 Mbit/s und kann für 128 Kanalpaare je 64 kbit/s genutzt werden.

Wie Figur 2 zeigt, bedient eine LTG im vorhandenen Fall 120 Sprachkanalpaare plus 8 x 16 kb/s oder 2 x 64 kb/s Common Signaling Channel.

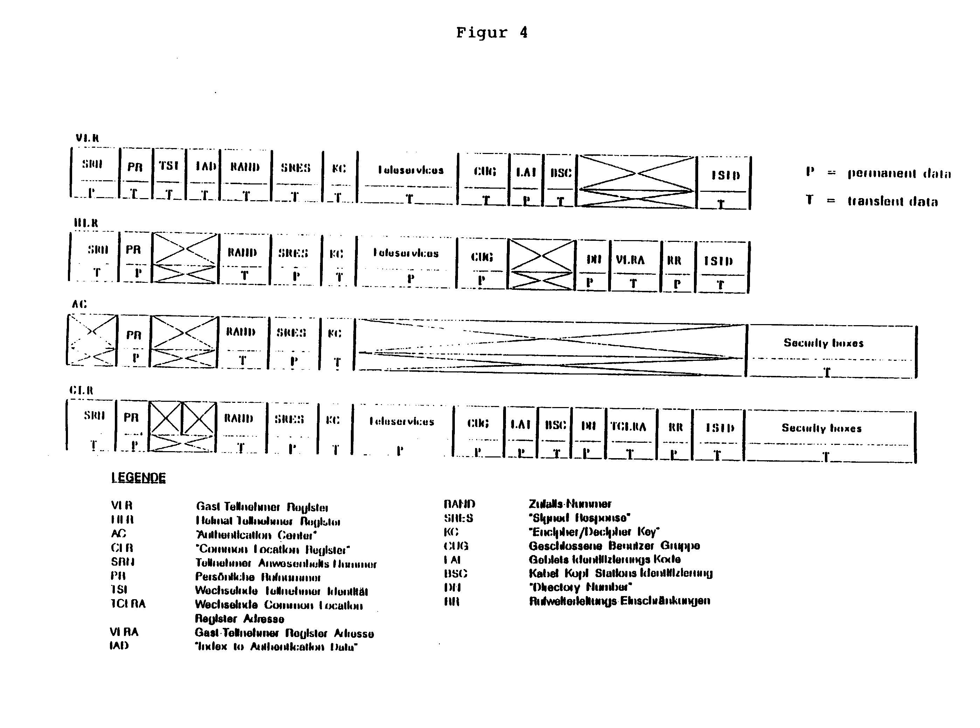

Das Register CLR besitzt alle Datenfelder, die normalerweise das "Home Location Register" (HLR), das "Visitor Location Register" (VLR) und das "Equipment Identification Register" (EIR) jeweils im einzelnen gemeinsam haben (Figur 4).

Da die meisten Datenfelder in den genannten Registern (HLR, VLR, EIR) der gegenseitigen Verknüpfung dienen und zumindest temporär umgespeichert werden, ist die Länge eines Eintrags ('entry') in einem gemeinsamen Register (CLR) nur geringfügig länger als der Eintrag im HLR.

Zur Adressierung der Einträge und ihre Generierung im Falle des Erscheinens eines Teilnehmers im Vermittlungsbereich eines SASC ist zu bemerken:

Dem Vorschlag für das Adressierungsprinzip und die Generierung der Einträge für die Teilnehmer liegt die Erkenntnis zugrunde, daß

a) der Vorgang des "Lock on" eines Teilnehmers im eigenen Bereich (Home SASC), im fremden Bereich (Roaming SASC) und bei Neueintrag (Erwerb der Nutzungsberechtigung) immer gleich ist und

b) gemäß der ADAC Studie 'Mobilität', vor allem in einem UCCN, die Zahl der Teilnehmer, die nach ihrem Mobilitätsmuster einen Vermittlungsbereich häufiger wechseln, relativ klein ist.

Die Berechtigung zur Zulassung eines Geräts und damit zur Vergabe der persönlichen Telefon-Chipkarte kann beim Netzbetreiber und dem nutzungsberechtigten Unternehmen liegen.

In diesem Zusammenhang verwendbare Chipkarten haben zwei wichtige Einträge, die gemäß dem hier gemachten Vorschlag "non volatile" aber vom SASC über das Common Signalling Netz änderbar sind.

Es handelt sich um:

a) die Persönliche Rufnummer (SPR) und
b) die Subscriber Roaming Number (SNR).

Bei einem "Lock on" mit einem Terminal mit entsprechender Berechtigung (Berechtigungs-Identifikation) vergibt das SASC eine PR eines freien "entry" des CLR (in der Regel die des nächst freien Eintrags oder falls ein Teilnehmer bestimmte Wünsche hat, eine ausgesuchte Nummer des frei verfügbaren Repertoirs).

Der eigene Vermittlungsbereich ist dadurch gekennzeichnet, daß PR und SRN identisch sind, was, wie später erläutert, für die Abwicklung des Verkehrs mit global mobilen Teilnehmern von besonderer Bedeutung ist.

Da nun in der, im Endgerät mit Vergabeberechtigung benutzten Chipkarte sowohl die eine neue PR als auch die SNR eingetragen sind, kann diese Karte im eigenen Gerät bereits ab diesem Zeitpunkt benutzt werden. Sonderfunktionen z.B. aufgrund der Aufgaben eines Mitarbeiters aktiviert für ihn die zuständige Stelle im Unternehmen oder der Netzbetreiber meist zu einem späteren Zeitpunkt.

Für das CLR gibt es zwei Pointer, die SRN und die PR.

Nach dem hier beschriebenen Verfahren ist ein "Home Subscriber" Gast im eigenen Vermittlungsbereich. Bei "lock on" meldet er sich wie jeder fremde Teilnehmer mit seiner SRN und adressiert damit den Eintrag mit identischer PR im CLR. Alle übrigen Abläufe der Rufabwicklung verlaufen nach den aus der Mobilfunktechnik bekannten Verfahren ("Home Subscriber")

Ein "Roaming Subscriber" wandert schnell oder langsam durch das Globale Netz und er meldet sich grundsätzlich mit der letzten ihm zugeteilten SRN. Dabei erkennt die erste fremde Vermittlungsstelle an der "Exchange ID", daß es sich um einen fremden Teilnehmer handelt. Es belegt für diesen Gast das nächst freie "entry" in seinem CLR und fordert unter Mitteilung der neuen "entry" (SRN)-Nummer und Verwendung der alten SRN alle ruf-/verkehrsrelevanten Daten aus dem "Home CLR" über das Signalisierungsnetz an, einschließlich der PR des fremden Teilnehmers.

Im "Home SASC" wird daraufhin der Eintrag im SRN-Feld geändert und durch die neue SRN ersetzt. Ab diesem Zeitpunkt kann der Teilnehmer eigene Rufe über das fremde SASC abwickeln, ohne daß dazu weitere Anfragen an das "Home CLR" erforderlich sind. Die Behandlung ankommender Rufe wird später noch erläutert.

Verläßt ein Roaming Subscriber ein oder mehrmals einen fremden Vermittlungsbereich, dann ist das Verfahren jeweils identisch - wie oben beschrieben - bis auf die Tatsache, daß das fremde SASC erkennt, daß die SRN und der Eintrag im PR-Feld nicht übereinstimmen. In einem solchen Fall reicht das fremde SASC die Anfrage unter Mitteilung der neuen SRN und Verwendung der PR an das "Home SASC" weiter, welches daraufhin die neue SRN in seinem CLR einträgt und die ruf-/ verkehrsrelevanten Daten an das neue, fremde SASC überträgt. Das vorherige, fremde SASC löscht den Eintrag, so daß dieses "entry" nun wieder frei verfügbar für andere Gäste und neue Teilnehmer wird.

Auf die beschriebene Weise wandert der mobile Teilnehmer durch das Netz und bleibt dabei selber identifizierbar und durch sein "Home SASC" lokalisierbar.

Die teilnehmerpersönliche Rufnummer (PR) hat wie zuvor beschrieben einen gewissen Grad von Vertraulichkeit. Nicht jeder wird bereit sein, sie der Öffentlichkeit bekanntzugeben. Darüberhinaus gibt es in vielen Fällen auch administrative und organisatorische Gründe, sowie die Bildung von Kurz- und personenneutralen Insütutions-Rufnummern, die für eine Möglichkeit der Überdeckung, wie hier beschreiben, der PR durch eine "Directory Call Number" (DCN) sprechen.

Die "Directory Call Number" ist in der Regel die, die der Teilnehmer im Telefonbuch eintragen läßt und mit der er normalerweise angerufen wird. Der Zugriff auf die PR bleibt also für alle Teilnehmer, die die PR nicht kennen, indirekt. Dies eröffnet dem Teilnehmer die Möglichkeit, die Rufweiterleitung für Anrufe über veröffentlichte Rufnummern beliebig einzuschränken oder auszudehnen. Das gleiche gilt auch für die fallweise Verrechnung von Differenzgebühren, die bei wechselnden Aufenthaltsorten des angerufenen Teilnehmers entstehen können.

Die erfindungsgemäße Schaltungsanordnung zur Herstellung von Fernmeldeverbindungen in einem Fernmeldenetz weist mindestens einen Netzknoten (SACS1) auf, der als Vermittlungsanlage ausgestaltet ist, sowie fernmeldetechnische Endeinrichtungen T1, T2, ...; T1', .... Dies sind insbesondere Fernsprechendgeräte.

Die Vermittlungsanlage (SACS1) weist erste Register (RNR) und ein zweites Register (CLR) auf. Die ersten Register (RNR) sind über gewählte, nebenstellen- und/oder -organisationsbezogene Rufkennzahlen (227, 20, 476, 14) und Teilnehmernummern (2020, 3476, 202, 2000) ansteuerbar. Das zweite Register ist über einen Eintrag (PR = 216750) in den ersten Registern oder direkt über eine gewählte Netzkennzahl (175) und eine personenindividuelle Rufnummer (PR = 216750) ansteuerbar.

Die Vermittlungsanlage weist ein Steuerwerk (CCU1) mit einem in der Weise ausgestalteten Steuerungsprogramm auf, daß beim Aufbau einer fernmeldetechnischen Verbindung von einem rufenden A-Teilnehmer zu einem B-Teilnehmer (T1) in Abhängigkeit von der gewählten Rufnummer entweder eines der ersten Register (RNR) oder direkt das zweite Register (CLR) angesteuert wird, wobei bei einer Ansteuerung eines der ersten Register (RNR) in Abhängigkeit einer dort eingetragenen Rufbehandlungsanweisung das zweite Register (CLR) angesteuert wird. Nach Ansteuerung des zweiten Registers (CLR) wird aufgrund einer dort eingetragenen Information (SRN), die den Ort bzw. den Anschluß (KKS) der aktuellen Ereichbarkeit des B-Teilnehmers im Netz bezeichnet, die Verbindung zu dem B-Teilnehmer durchgeschaltet.

In dem Fernmeldenetz kann mindestens ein weiterer Netzknoten (SASC2, ...) vorgesehen sein, der mit dem ersten Netzknoten (SACS1) verbindbar ist, wobei der weitere Netzknoten ein Steuerwerk mit einem Steuerprogramm aufweist, das wie das zuvor erwähnte Steuerprogramm ausgebildet ist.

Die genannten Netzknoten (SACS1, ...) sind mit fremden Netzen, vorzugsweise Mobilfunknetzen verbindbar, die durch persönliche Rufnummern des B-Teilnehmers identifierbare Endeinrichtungen aufweisen können.

Das Steuerprogramm des jeweiligen Steuerwerks (CCU1, ...) kann auch in der Weise ausgestaltet sein, daß die Abfrage des Registers (CLR) durch einen Befehl ausgelöst wird, der in eine weitere Endeinrichtung (z.B. Sekretärinnen-Fernsprechapparat T1') eingebbar ist, die derjenigen Endeinrichtung (T1) des B-Teilnehmers fernmeldetechnisch zugeordnet ist, zu der die Verbindung von dem rufenden A-Teilnehmer aufgebaut worden ist.

Die weitere Endeinrichtung weist ein Betätigungselement auf, durch dessen Betätigung der Befehl genierbar ist, durch den die Verbindung zu der zugeordneten Endeinrichtung (z.B. Chefapparat T1) des B-Teilnehmers oder zu einer anderen Endeinrichtung (T2, ...) des B-Teilnehmers hergestellt wird.

Die genannten Netzknoten (SCAS1, ...) sind insbesondere als Fernmeldenebenstellenanlagen ausgestaltet, die Fernmeldeverbindungen nach den vermittlungstechnischen Prinzipien von Mobilfunkvermittiungsanlagen aufbauen und abbauen und/oder verwalten.

Ausführungsformen der Verfahren zur Herstellung von Fernmeldeverbindungen sind durch die beschriebenen Steuerprogramme der Vermittlungsanlagen definiert.

Insbesondere ist das erfindungsgemäße Verfahren zur Herstellung von Fernmeldeverbindungen in einem Fernmeldenetz durchführbar, das einen zentralen Netzknoten (SACS1) aufweist, der als Vermittlungsanlage ausgestaltet ist.

Wie beschrieben weist die Vermittlungsanlage (SACS1) erste Register (RNR) und ein zweites Register (CLR) auf. Die ersten Register (RNR) sind über gewählte, nebenstellen- bzw. organisationsbezogene Rufkennzahlen (227, 20, 476, 14) und Teilnehmernummern (2020, 3476, 202, 2000) ansteuerbar.

Das zweite Register ist über einen Eintrag (PR = 216750) in den ersten Registern oder direkt über eine gewählte Netzkennzahl (175) und eine personenindividuelle Rufnummer (PR = 216750) ansteuerbar.

Beim Aufbau einer fernmeldetechnischen Verbindung von einem rufenden A-Teilnehmer zu einem B-Teilnehmer (T1) wird in Abhängigkeit von der gewählten Rufnummer entweder eines der ersten Register (RNR) oder direkt das zweite Register (CLR) angesteuert. Bei einer Ansteuerung eines der ersten Register (RNR) wird in Abhängigkeit einer dort eingetragenen Rufbehandlungsanweisung (RBH) das zweite Register (CLR) angesteuert. Nach Ansteuerung des zweiten Registers (CLR) wird aufgrund einer dort eingetragenen Information (SRN), die den Ort bzw. den Anschluß (KKS) der aktuellen Ereichbarkeit des B-Teilnehmers im Netz bezeichnet, die Verbindung zu dem B-Teilnehmer durchgeschaltet.

In diesem Zusammenhang kann vorgesehen sein, daß die Abfrage des Registers (CLR) durch einen Befehl ausgelöst wird, der in eine weitere Endeinrichtung (z.B. Sekretärinnen-Fernsprechapparat T1') eingebbar ist, die derjenigen Endeinrichtung (T1) des B-Teilnehmers fernmeldetechnisch zugeordnet ist, zu der die Verbindung von dem rufenden A-Teilnehmer aufgebaut worden ist.

**Patentansprüche**

1. Verfahren zur Herstellung von Fernmeldeverbindungen in einem Fernmeldenetz, mit mindestens einem Netzknoten (SACS1), der als Vermittlungsanlage ausgestaltet ist,
dadurch gekennzeichnet,

daß die Vermittlungsanlage (SACS1) erste Register (RNR) und ein zweites Register (CLR) aufweist, daß die ersten Register (RNR) über gewählte, organisationsbezogene Rufkennzahlen (227, 20, 476, 14) und Teilnehmernummern (2020, 3476, 202, 2000) ansteuerbar sind,
daß das zweite Register über einen Eintrag (PR = 216750) in den ersten Registern oder direkt über eine gewählte Netzkennzahl (175) und eine personenindividuelle Rufnummer (PR = 216750) ansteuerbar ist,
daß beim Aufbau einer fernmeldetechnischen Verbindung von einem rufenden A-Teilnehmer zu einem B-Teilnehmer (T1) in Abhängigkeit von der gewählten Rufnummer entweder eines der ersten Register (RNR) oder direkt das zweite Register (CLR) angesteuert wird,
daß bei einer Ansteuerung eines der ersten Register (RNR) in Abhängigkeit einer dort eingetragenen Rufbehandlungsanweisung (RBH) das zweite Register (CLR) angesteuert wird, und
daß nach Ansteuerung des zweiten Registers (CLR) aufgrund einer dort eingetragenen Information (SRN), die den Anschluß (KKS) der aktuellen Ereichbarkeit des B-Teilnehmers im Netz bezeichnet, die Verbindung zu dem B-Teilnehmer durchgeschaltet wird.

2. Verfahren nach Anspruch 1, dadurch gekennzeichnet, daß die Abfrage des Registers (CLR) durch einen Befehl ausgelöst wird, der in eine weitere Endeinrichtung (z.B. Sekretärinnen-Fernsprechapparat T1') eingebbar ist, die derjenigen Endeinrichtung (T1) des B-Teilnehmers fernmeldetechnisch zugeordnet ist, zu der die Verbindung von dem rufenden A-Teilnehmer aufgebaut worden ist.

3. Schaltungsanordnung zur Herstellung von Fernmeldeverbindungen in einem Fernmeldenetz, mit mindestens einem Netzknoten (SACS1), der als Vermittlungsanlage ausgestaltet ist,
dadurch gekennzeichnet,
daß die Vermittlungsanlage (SACS1) erste Register (RNR) und ein zweites Register (CLR) aufweist, daß die ersten Register (RNR) über gewählte, organisationsbezogene Rufkennzahlen (227, 20, 476, 14) und Teilnehmernummern (2020, 3476, 202, 2000) ansteuerbar sind, daß das zweite Register über einen Eintrag (PR = 216750) in den ersten Registern oder direkt über eine gewählte Netzkennzahl (175) und eine personenindividuelle Rufnummer (PR = 216750) ansteuerbar ist, und die Vermittlungsanlage ein Steuerwerk (CCU1) mit einem in der Weise ausgestalteten Steuerprogramm aufweist, daß beim Aufbau einer fernmeldetechnischen Verbindung von einem rufenden A-Teilnehmer zu einem B-Teilnehmer (T1) in Abhängigkeit von der gewählten Rufnummer entweder eines der ersten Register (RNR) oder direkt das zweite Register (CLR) angesteuert wird, daß bei einer Ansteuerung eines der ersten Register (RNR) in Abhängigkeit einer dort eingetragenen Rufbehandlungsanweisung (RBH) das zweite Register (CLR) angesteuert wird, und daß nach Ansteuerung des zweiten Registers (CLR) aufgrund einer dort eingetragenen Information (SRN), die den Ort (KKS) der aktuellen Ereichbarkeit des B-Teilnehmers im Netz bezeichnet, die Verbindung zu dem B-Teilnehmer durchgeschaltet wird.

4. Schaltungsanordnung nach Anspruch 3, dadurch gekennzeichnet, daß in dem Fernmeldenetz mindestens ein weiterer Netzknoten (SASC2, ...) vorgesehen ist, der mit dem ersten Netzknoten (SACS1) verbindbar ist und der ein Steuerwerk mit einem Steuerprogramm aufweist, das wie das Steuerprogramm nach Anspruch 3 ausgebildet ist.

5. Schaltungsanordnung nach Anspruch 3 oder 4, dadurch gekennzeichnet, daß die Netzknoten (SACS1, ...) mit fremden Netzen, vorzugsweise Mobilfunknetzen verbindbar sind, die durch persönliche Rufnummern des B-Teilnehmers identifizierbare Endeinrichtungen aufweisen können.

**6.** Schaltungsanordnung nach einem der Ansprüche 3 bis 5, dadurch gekennzeichnet, daß das Steuerprogramm des Steuerwerks (CCU1, ...) in der Weise ausgestaltet ist, daß die Abfrage des zweiten Registers (CLR) durch einen Befehl ausgelöst wird, der in eine weitere Endeinrichtung (z.B. Sekretärinnen-Fernsprechapparat T1') eingebbar ist, die derjenigen Endeinrichtung (T1) des B-Teilnehmers fernmeldetechnisch zugeordnet ist, zu der die Verbindung von dem rufenden A-Teilnehmer aufgebaut worden ist.

**7.** Schaltungsanordnung nach Anspruch 6, dadurch gekennzeichnet, daß die weitere Endeinrichtung ein Betätigungselement aufweist, durch dessen Betätigung der Befehl generierbar ist, durch den die Verbindung zu der zugeordneten Endeinrichtung (z.B. Chefapparat T1) des B-Teilnehmers oder zu einer anderen Endeinrichtung (T2, ...) des B-Teilnehmers hergestellt wird.

**8.** Schaltungsanordnung nach einem der Ansprüche 3 bis 7, dadurch gekennzeichnet, daß die Netzknoten (SASC1, ...) als Fernmeldenebenstellenanlagen mit jeweils einem Steuerwerk ausgestaltet sind, mit einer Abfragemöglichkeit des zweiten Registers (CLR), in dem die Information (SRN) gespeichert ist, die den Ort (KKS) der aktuellen Erreichbarkeit des B-Teilnehmers im Netz bezeichnet, wobei das Steuerwerk mittels dieser Information die Verbindung zwischen einem rufenden A-Teilnehmer und dem gerufenen B-Teilnehmers durchschaltet.

**9.** Schaltungsanordnung nach einem der Ansprüche 3 bis 8, dadurch gekennzeichnet, daß teilnehmeridentifizierende Daten (PR, SNR, SSI(subscriber service indicator)) für Mobilkommunikationsnetze (D1, D2, EI) in den zweiten Registern (CLR) verwaltet werden.

## Claims

**1.** Method for producing telecommunications links in a telecommunications network, having at least one network node (SACS1) which is designed as a switching system,
characterized

in that the switching system (SACS1) has first registers (RNR) and a second register (CLR), in that the first registers (RNR) can be actuated via dialled, organization-related telephone code numbers (227, 20, 476, 14) and subscriber numbers (2020, 3476, 202, 2000),
in that the second register can be actuated via an entry (PR = 216750) in the first registers or directly via a dialled network code number (175) and a personal telephone number (PR = 216750),
in that, when a telecommunications link is set up from a calling A subscriber to a B subscriber (T1) either one of the first registers (RNR) or, directly, the second register (CLR) is actuated as a function of the dialled telephone number,
in that, when one of the first registers (RNR) is actuated, the second register (CLR) is actuated as a function of a call handling instruction (RBH) entered in the first register, and
in that, after actuation of the second register (CLR), the link to the B subscriber is connected through on the basis of information (SRN) which is entered in the second register (CLR) and denotes the connection (KKS) for the present accessibility of the B subscriber in the network.

**2.** Method according to Claim 1, characterized in that the interrogation of the register (CLR) is initiated by means of an instruction which can be entered in a further terminal (for example a secretary's telephone set T1') which, for telecommunications purposes, is allocated to that terminal (TI) of the B subscriber to which the link has been set up by the calling A subscriber.

**3.** Circuit arrangement for producing telecommunications links in a telecommunications network, having at least one network node (SACS1) which is designed as a switching system,
characterized
in that the switching system (SACS1) has first registers (RNR) and a second register (CLR), in that the first registers (RNR) can be actuated via dialled, organization-related telephone code numbers (227, 20, 476, 14) and subscriber numbers (2020, 3476, 202, 2000), in that the second register can be actuated via an entry (PR = 216750) in the first registers or directly via a dialled network code number (175) and a personal telephone number (PR = 216750), and the switching system has a control unit (CCU1) with a control programme which is designed in such a manner that, when a telecommunications link is set up from a calling A subscriber to a B subscriber (T1) either one of the first registers (RNR) or, directly, the second register (CLR) is actuated as a function of the dialled telephone number, in that, when one of the first registers (RNR) is actuated, the second register (CLR) is actuated as a function of a call handling instruction (RBH) entered in the first register, and in that, after actuation of the second register (CLR), the link to the B subscriber is connected through on the basis of information (SRN) which is entered there and denotes the location (KKS) of the present accessibility of the B subscriber in the network.

4. Circuit arrangement according to Claim 3, characterized in that at least one further network node (SASC2, ...) is provided in the telecommunications network, which further network node (SASC2, can be connected to the first network node (SACS1) and has a control unit with a control programme which is designed in the same way as the control programme according to Claim 3.

5. Circuit arrangement according to Claim 3 or 4, characterized in that the network nodes (SACS1, ...) can be connected to external networks, preferably mobile radio networks, which can have terminals which can be identified by personal telephone numbers of the B subscriber.

6. Circuit arrangement according to one of Claims 3 to 5, characterized in that the control programme of the control unit (CCU1, ...) is designed in such a manner that the interrogation of the second register (CLR) is initiated by means of an instruction which can be entered in a further terminal (for example a secretary's telephone set T1') which, for telecommunications purposes, is allocated to that terminal (T1) of the B subscriber to which the link has been set up by the calling A subscriber.

7. Circuit arrangement according to Claim 6, characterized in that the further terminal has an operating element whose operation allows the instruction to be generated by means of which the link to the associated terminal (e. g. manager's set T1) of the B subscriber or to another terminal (T2, ... ) of the B subscriber is produced.

8. Circuit arrangement according to one of Claims 3 to 7, characterized in that the network nodes (SASC1, ...) are designed as private branch exchanges each having one control unit, having the capability to interrogate the second register (CLR) in which the information (SRN) is stored which denotes the location (KKS) of the present accessibility of the B subscriber in the network, the control unit using this information to switch through the link between a calling A subscriber and the called B subscriber.

9. Circuit arrangement according to one of Claims 3 to 8, characterized in that data (PR, SNR, SSI (subscriber service indicator)) which identifies subscribers are controlled, for mobile communications networks (D1, D2, E1), in the second registers (CLR).

**Revendications**

1. Procédé permettant d'établir des liaisons de télécommunications dans un réseau de télécommunication qui comprend au moins un noeud de réseau (SACS1) se présentant sous la forme d'un central téléphonique,
    caractérisé par le fait

    que le central téléphonique (SACS1) comprend des premiers registres (RNR) et un second registre (CLR),
    que les premiers registres (RNR) peuvent être amorcés par l'intermédiaire d'indicatifs d'appel composés propres à des organisations (227, 20, 476, 14) et de numéros d'abonnés (2020, 3476, 202, 2000),
    que le second registre peut être amorcé par l'intermédiaire d'une inscription (PR = 216750) dans les premiers registres ou directement par l'intermédiaire d'un indicatif de réseau composé (175) et d'un numéro d'appel personnel (PR = 216750),
    que lorsqu'un abonné A établit une liaison de télécommunication avec un abonné B (T1) qu'il appelle, en fonction des numéros d'appel composés, un des premiers registres (RNR) est amorcé ou bien le second registre (CLR) est amorcé directement,
    que lorsque l'un des premiers registres (RNR) est amorcé en fonction d'une instruction de traitement d'appel (RBH) contenue dans ledit premier registre, le second registre (CLR) est amorcé, et
    qu'une fois le second registre (CLR) amorcé, la liaison avec l'abonné B est établie sur la base d'une information (SRN) contenue dans ledit second registre, laquelle indique le raccordement (KKS) où l'abonné B peut être joint ponctuellement dans le réseau.

**2.** Procédé selon la revendication 1, caractérisé en ce que l'interrogation du registre (CLR) est initiée par une instruction pouvant être saisie dans un terminal supplémentaire (par exemple un poste téléphonique de secrétariat T1), lequel est associé téléphoniquement au terminal (T1) de l'abonné B vers lequel a été établie la liaison en provenance de l'abonné A appelant.

**3.** Circuit permettant d'établir des liaisons de télécommunications dans un réseau de télécommunication qui comprend au moins un noeud de réseau (SACS1) se présentant sous la forme d'un central téléphonique, caractérisé en ce

que le central téléphonique (SACS1) comprend des premiers registres (RNR) et un second registre (CLR), que les premiers registres (RNR) peuvent être amorcés par l'intermédiaire d'indicatifs d'appel composés propres à des organisations (227, 20, 476, 14) et de numéros d'abonnés (2020, 3476, 202, 2000), que le second registre peut être amorcé par une entrée (PR = 216750) dans les premiers registres ou directement par l'intermédiaire d'un indicatif de réseau (175) composé et d'un numéro d'appel (PR = 216750) de particulier, et le central téléphonique présente un dispositif de commande (CCU1) comportant un programme de commande conçu de telle manière que lors de l'établissement d'une liaison de télécommunication d'un abonné A appelant vers un abonné B (T1), en fonction du numéro d'appel composé, un des premiers registres (RNR) est amorcé ou bien le second registre (CLR) est amorcé directement, que lorsque l'un des premiers registres (RNR) est amorcé en fonction d'une instruction de traitement d'appel (RBH) contenue dans ledit premier registre, le second registre (CLR) est amorcé, et qu'une fois le second registre (CLR) amorcé, la liaison avec l'abonné B est établie sur la base d'une information (SRN) contenue dans ledit second registre, laquelle indique l'endroit (KKS) où l'abonné B peut être joint ponctuellement dans le réseau.

**4.** Circuit selon la revendication 3, caractérisé en ce qu'au moins un noeud de réseau (SASC2, ... ) est prévu dans le réseau de télécommunication, lequel peut être relié au premier noeud de réseau (SACS1) et présente un dispositif de commande comportant un programme de commande conçu de la même manière que le programme de commande selon la revendication 3.

**5.** Circuit selon la revendication 3 ou 4, caractérisé en ce que les noeuds de réseau (SACS1, ...) peuvent être reliés à des réseaux externes, de préférence à des réseaux de radiocommunication mobile, qui peuvent présenter des terminaux identifiables par les numéros d'appel personnel de l'abonné B.

**6.** Circuit selon l'une quelconque des revendications 3 à 5, caractérisé en ce que le programme de commande du dispositif de commande (CCU1, ...) est conçu de telle manière que l'interrogation du second registre (CLR) est initiée par une instruction pouvant être saisie dans un terminal supplémentaire (par exemple un poste téléphonique de secrétariat T1'), lequel est associé téléphoniquement au terminal (T1) de l'abonné B vers lequel a été établie la liaison en provenance de l'abonné A appelant.

**7.** Circuit selon la revendication 6, caractérisé en ce que le terminal supplémentaire présente un élément de commande dont l'actionnement permet de générer l'instruction par le biais de laquelle est établie la liaison vers le terminal associé (par exemple poste de direction T1) de l'abonné B ou vers un autre terminal (T2, ...) de l'abonné B.

**8.** Circuit selon l'une quelconque des revendications 3 à 7, caractérisé en ce que les noeuds de réseau (SASC1, ...) sont réalisés sous la forme de centraux téléphoniques munis chacun d'un dispositif de commande, d'un dispositif d'interrogation du second registre (CLR) dans lequel est enregistrée l'information (SRN) désignant l'endroit (KKS) du réseau ou peut être actuellement joint l'abonné B, le dispositif de commande, à l'aide de cette information, pouvant effectuer le transfert de la communication entre un abonné A appelant et l'abonné B appelé.

**9.** Circuit selon l'une quelconque des revendications 3 à 8, caractérisé en ce que les données identifiant l'abonné (PR, SNR, SSI (indicateur de service d'abonné)) pour les réseaux de communication mobile (D1, D2, E1) sont gérées dans les seconds registres (CLR) .

Figur 1

Fig.2

-227-2020

**Rufnummern-Register A**
(RNR)

| RBH | PR |
|-----|-----|
| | |
| ⋮ | |
| W | 216750 |
| | |
| Parteizentrale | |

-20-3476

**Rufnummern-Register B**
(RNR)

| RBH | PR |
|-----|-----|
| | |
| ⋮ | |
| | |
| D | 216750 |
| Bundeshaus | |

-476-202

**Rufnummern-Register C**
(RNR)

| RBH | PR |
|-----|-----|
| | |
| ⋮ | |
| U | 216750 |
| Fraktion | |

-14-2000

**Rufnummern-Register N**
(RNR)

| RBH | PR |
|-----|-----|
| S | 216750 |
| ⋮ | |
| Ministerium | |

PR
(175-216750)

**Common Location Register**
(CLR)

| SRN | —— siehe Fig. 4 —— |
|-----|-----|
| | |
| XYZ | |
| | |
| ⋮ | |
| | |
| | |

FIG. 3

20

# Figur 4

P = permanent data
T = transient data

**LEGENDE**

| | | | |
|---|---|---|---|
| VLR | Gast Teilnehmer Register | RAND | Zufalls-Nummer |
| HLR | Heimat Teilnehmer Register | SRES | "Signed Response" |
| AC | "Authentication Center" | KC | "Encipher/Decipher Key" |
| CLR | "Common Location Register" | CUG | Geschlossene Benutzer Gruppe |
| SRN | Teilnehmer Anwesenheits Nummer | LAI | Gebiets Identifizierungs Kode |
| PR | Persönliche Rufnummer | BSC | Kabel Kopf Stations Identifizierung |
| TSI | Wechselnde Teilnehmer Identität | DN | "Directory Number" |
| TCLRA | Wechselnde Common Location Register Adresse | RR | Rufweiterleitungs Einschränkungen |
| VLRA | Gast-Teilnehmer Register Adresse | | |
| IAD | "Index to Authentication Data" | | |